# EUROPÄISCHE PATENTSCHRIFT

(11) **EP 1 688 401 B1**
(45) Veröffentlichungstag und Bekanntmachung des Hinweises auf die Patenterteilung: **15.06.2011**
(21) Anmeldenummer: 06001051.9
(22) Anmeldetag: 18.01.2006
(51) Int. Cl.: C04B 28/02, C04B 28/18

(54) **Mineralisches Dämmelement und Verfahren zu seiner Herstellung**
Mineral insulation element and method for producing it
Élément d'isolation et procédé de sa fabrication

(30) Priorität: 04.02.2005 DE 102005005259
(43) Veröffentlichungstag der Anmeldung: 09.08.2006
(73) Patentinhaber: Xella Dämmsysteme GmbH, 92551 Stulln (DE)
(72) Erfinder: Frey, Emmo, Dr., 85221 Dachau (DE); Straube, Berit, Dr., 14822 Linthe (DE)
(74) Vertreter: Patentanwälte Dr. Solf & Zapf

(56) Entgegenhaltungen:
- EP-A- 1 055 648
- CH-A- 231 859
- DE-A1- 10 131 360
- FR-A- 880 956
- US-A- 4 329 178
- US-A- 4 394 335
- US-A- 4 661 551

## Beschreibung

Die Erfindung betrifft ein aluminiumgetriebenes mineralisches Dämmelement, wie eine Dämmplatte, einen Dämmbalken oder eine beliebige andere Raumform, auch als Schüttgut, mit Calciumsilikathydraten als gerüst- und festigkeitsbildenden Mineralphasen. Die Erfindung betrifft zudem ein Verfahren zur Herstellung des Dämmelements.

Bei der Herstellung mineralischer Dämmelemente werden eine niedrige Wärmeleitfähigkeit (WLF) und eine geringe Rohdichte bei gleichzeitig relativ hoher mechanischer Festigkeit angestrebt.

Die DE 101 31 360 A1 beschreibt ein Verfahren zur Herstellung von Porenbetondämmplatten mit Aluminium in Form von Paste als Porenbildner, wobei z. B. Rohdichten zwischen 100 und 120 kg/m³ bei einer Wärmeleitfähigkeit von λ = 0,045 W/mK und einer Druckfestigkeit von 0,5 N/mm² erzielt werden.

Beim Auftreiben durch Aluminium z.B. in Form von Aluminiumpulver oder -paste kommt es in den gegossenen Frischmassen mit abnehmendem Abstand zur Oberfläche durch den abnehmenden hydrostatischen Druck zu unterschiedlich aufgeweiteten Treibporen. Die Porositätsverteilung in den erhaltenen Dämmelementen ist somit nicht homogen. Die größeren Poren verhindern, dass geringere Wärmeleitfähigkeiten als z. B. 0,045 W/mK erreicht werden.

Zudem erhält man grundsätzlich relativ große Treibporen, so dass auch dadurch angestrebte geringere Wärmeleitfähigkeiten nicht erzielbar sind.

Aufgabe der vorliegenden Erfindung ist, ein mineralisches calciumsilikathydratgebundenes aluminiumgetriebenes Dämmelement einer geringen Wärmeleitfähigkeit von unter 0,045 W/mK und hoher Festigkeit bei geringer Rohdichte, insbesondere aus einem kostengünstigen Versatz, sowie ein Verfahren zu seiner Herstellung zu schaffen.

Diese Aufgabe wird mit den Merkmalen der Ansprüche 1 bzw. 13 gelöst. Vorteilhafte Weiterbildungen der Erfindung sind jeweils in den hiervon abhängigen Unteransprüchen gekennzeichnet.

Zur Lösung der Aufgabe wurde zunächst versucht, durch Verwendung feinerer Aluminiumteilchen als üblich z. B. in einer Paste oder in Form eines Pulvers kleine Poren entstehen zu lassen. Es stellte sich jedoch heraus, dass die feineren Aluminiumteilchen vor der Wasserstoffbläschen bildendenden Reaktion mit Wasser stark agglomeriert sind, was zu noch größeren Poren führte als bei Verwendung von Aluminiumteilchen einer Korngröße, die üblicherweise verwendet wird.

Die Erfindung ist daher einen neuen, nicht naheliegenden Weg gegangen, indem bei Verwendung von in der Regel plättchenförmigen Aluminiumteilchen üblicher Feinheit die Bläschenbildung gehemmt und/oder dafür gesorgt wird, dass die Aluminiumteilchen weitgehend desagglomeriert mit Feststoffteilchen der Frischmassensuspension in Verbindung stehen. Auf diese Weise entstehen kleinere Treibporen als im Verfahren nach dem Stand der Technik, so dass auch geringere Wärmeleitfähigkeiten erzielt werden können, wobei zudem geringere Rohdichten bei ausreichend bis sehr guten Festigkeiten zur Verfügung gestellt werden können.

Die Erfindung sieht demgemäß die Verwendung von Mitteln vor, die kleine Treibporen entwickeln, indem z. B. eine Affinität von Aluminiumteilchen beziehungsweise kleinen in den Aluminiumprodukten vorliegenden Aluminiumteilchenagglomeraten zur Feststoffteilchenoberfläche in der Frischmassensuspension erzeugt wird und eine gewisse Bindung bewirkt wird. In Kombination können auch desagglomerierende Mittel bezüglich der Aluminiumteilchen verwendet werden. Dadurch wird in überraschender Weise die Bildung der Treibporen gehemmt oder behindert und zwar derart, dass auch der unterschiedliche hydrostatische Druck in einer Suspension weitgehend ohne Einfluss bleibt. Die Mittel werden im weiteren im Rahmen der Erfindung auch als "Treibporenhemmer" bezeichnet.

Besonders gut gelingt die angestrebte Bildung von relativ kleinen Treibporen insbesondere gleichmäßiger Größe bei Verwendung von sogenannten tetrafunktionellen Polysiloxanen. Diese Polysiloxane werden z. B. in der EP 186847 B1 beschrieben. Es handelt sich um ein Alkylsilikonharz mit Alkoxygruppen, das aminofunktionelles Polydimethylsiloxan enthält. Es enthält neben den für Siloxane typischen Polydimethyl-Siloxanketten auch Trimethoxy- und Tetraethoxygruppen am Silicium und weist im ausreagierten Zustand eine Netzwerkstruktur auf, die es für die Anlagerung an silikatische Feststoffoberflächen geeignet macht. Es enthält neben tetrafunktionellen Gruppen somit auch di- und trifunktionelle Gruppen. Das im Rahmen der Erfindung bevorzugt verwendete Produkt ist das Produkt SMK 1311, beziehungsweise Wacker BS SMK 1311 der Firma Wacker Chemie, GmbH in Burghausen, das als tetrafunktionelles Polysiloxan enthaltendes Produkt zur erfindurigsgemäßen Bildung kleiner Gasbläschen aus Aluminiumteilchen besonders wirksam ist. Verbindungen des beschriebenen Typs werden im Folgenden kurz als "tetrafunktionelles Polysiloxan" bezeichnet.

Ihre bisherige Verwendung erfolgte zum Beispiel zum Wasserabweisendmachen von beispielsweise Porenbeton, Gips, in Wasser verdünnbaren Anstrichfarben, als Dispergiermittel bei der Polymerisation von Monomeren, sowie bei Anwendungen, bei denen organische Siliziumverbindungen in mit Wasser verdünnter Form eingesetzt werden können.

In üblichen Dämmplattenrezepturen, die sich bekanntlich von Porenbetonrezepturen deutlich unterscheiden, entwickeln die tetrafunktionellen Polysiloxane offenbar völlig andere Eigenschaften im Vergleich zu den bekannten Eigenschaften. In Dämmplattenfrischmischungen entwickeln die tetrafunktionellem Polysiloxane offenbar die Eigenschaft, die Bildung von relativ kleinen Bläschen zu bewirken, möglicherweise indem sie sich auf insbesondere mineralischen Partikeloberflächen anlagern und eine Affinität der Partikeloberfläche zu Aluminiumteilchen bewirken.

Der Fachmann weiß aus der Vielzahl der in der EP-PS 186847 B1 genannten Polysiloxane, insbesondere in Kombination mit den dort genannten zusätzlichen Verbindungen, wie Salzen wasserlöslicher organischer oder anorganischer Säuren sowie organischen Siliziumverbindungen mit basischem Stickstoff, diejenigen durch einfaches Ausprobieren auszuwählen, die für die Hemmung der Bläschenbildung, bzw. für die mögliche Ausbildung einer Affinität der mineralischen Partikeloberflächen zu metallischem Aluminium, die geeignetsten sind.

Der Fachmann wird auf der Basis der Lehre der vorliegenden Erfindung weitere entsprechend auf die Aluminiumteilchen wirkende Mittel und/oder weitere Mittel auffinden, die die Bläschen bzw. Treibporenbildung bei der Reaktion der Aluminiumteilchen beziehungsweise der in den üblicherweise verwendeten Aluminiumprodukten vorliegenden relativ kleinen Agglomeraten von Aluminiumteilchen mit Wasser behindern und/oder hemmen.

Mit dem erfindungsgemäßen Verfahren können mineralische calciumsilikathydratgebundene Dämmelemente insbesondere mit einer Rohdichte zwischen 75 und 110 kg/m³, unter Verwendung von feinteiligem Aluminium, insbesondere in Form von an sich bekannter, üblicherweise verwendeter, Aluminiumpaste als Porosierungsmittel hergestellt werden, wobei mehr als 40 Vol.-%, insbesondere mehr als 50 Vol.-% der Treibporen im Durchmesser kleiner als 1,0 mm und mehr als 75 Vol.-%, insbesondere mehr als 85 Vol.-% im Durchmesser kleiner als 2,0 mm sind, insbesondere bei einer Gesamtporosität von 90 bis 98 Vol.-%, insbesondere von 95 bis 97 Vol.-%. Dabei werden plättchenförmige Aluminiumteilchen z. B. in der Paste in üblicher Feinheit z. B. mit einem d₅₀-Wert von 32 bis 35 µm verwendet.

Bei der Durchführung des erfindungsgemäßen Verfahrens werden zum Erhalt einer Frischmischung für Dämmelemente z. B. vermischt:
- Wasser
- mindestens eine hydraulische Bindemittelkomponente, z. B. Portlandzement
- mindestens eine reaktionsfähige SiO₂-Komponente, z. B. Quarzmehl
- mindestens eine reaktionsfähige CaO-Komponente, z. B. Branntkalk und/oder Kalkhydrat,
- mindestens ein Sulfatträger, z. B. Gips oder Anhydrit,
- mindestens ein feinteiliges plättchenförmiges Aluminium, insbesondere Aluminiumpaste und/oder -pulver,
- mindestens ein Treibporen hemmendes Mittel, sowie
- gegebenenfalls übliche Zusatzstoffe, wie Kalksteinmehl, Flugasche, Porenbetonmehl oder Dämmplattenmehl und
- gegebenenfalls übliche Zusatzmittel.
Als Treibporenhemmer wird das oben beschriebene tetrafunktionelle Polysiloxan eingesetzt.

Die Zugabe des Treibporenhemmers erfolgt zweckmäßigerweise vor der Zugabe des Aluminiums und vorteilhafterweise vor oder während der Zugabe des Zements in die Mischung. Anschließend erfolgt die Zugabe des Aluminiums. Vermutlich lagern sich während des Rührens der Mischung die Aluminiumteilchen auf der mit dem Treibporenhemmer belegten Feststoffpartikeloberfläche an, die durch den Treibporenhemmer eine Affinität zu Aluminium entwickelt.

Es gelingt somit, die in der wässrigen Aluminiumpaste nicht oder kaum agglomerierten Aluminiumteilchen in die stark alkalische Mischung weitgehend ohne Agglomeration einzubringen, obwohl das alkalische Milieu die Oberflächenladung des Aluminiums stark ändert, so dass für den Emulgator der pH-neutralen Al-Paste nicht mehr die ursprünglichen Voraussetzungen für eine Dispersion der Aluminiumteilchen vorliegen. Bevorzugt wird eine Aluminiumpaste eingesetzt, wie sie in der DE-PS-2557689 beschrieben ist. Sie enthält vorteilhafterweise bis zu 80 Gew.-% Aluminium, sowie Wasser und einen Emulgator. Die wässrige Mischung für die Dämmelemente wird wie üblich in eine Gussform gegeben und treiben und ansteifen gelassen. Aus dem angesteiften, entformten Block werden Elemente geschnitten die auf herkömmliche Weise in einem Autoklaven gehärtet werden, vorzugsweise bis als Hauptmineralbindephase in den Dämmelementen Tobermorit vorliegt.

Vorzugsweise beträgt der Gehalt der Mischung an tetrafunktionellem Polysiloxan 0,1 bis 0,4 Gew.-%, besonders bevorzugt ist ein Gehalt von 0,2 bis 0,3 Gew.-%. Der Gehalt bezieht sich auf den Feststoffanteil der Mischung.

Bevorzugte hydrothermal zu härtende Mischungen ergeben sich aus den folgenden Zusammensetzungen. Dabei ist der Gehalt der Einzelkomponenten in der Mischung in Gewichtsprozent angegeben und bezieht sich auf den Feststoffanteil der Mischung. Außerdem bezieht sich der Gehalt an SiO₂, CaO und SO₃ jeweils auf die reine Komponente, das heißt auf ihre für die Funktion in der Mischung wesentlichen reaktionsfähigen Bestandteile. Somit ist beispielsweise die SiO₂-Komponente auf ihr SiO₂-Äquivalent bezogen angegeben, das heißt es wird eine derartige Menge der SiO₂-Komponente eingewogen, dass die Gesamtmenge an SiO₂ derjenigen Menge entspricht, die beim Einwiegen reinen Quarzmehls entsprechenden Gehalts vorgesehen ist. Entsprechend ist der Gehalt der CaO-Komponente auf das CaO-Äquivalent bezogen, dasjenige der SO₃-Komponente auf das SO₃-Äquivalent. Die Feinheiten sind in Blaine-Werten angegeben.

| | |
|---|---|
| hydraulische Bindemittelkomponente (Feinheit: 2000 - 5000 cm²/g) | 30 - 50 Gew.-%, insb. 35 -45 Gew.-% |
| SiO₂-Komponente (Feinheit: 5000 - 12000 cm²/g, insb. 8000 - 11000 cm²/g) | 15 - 45 Gew.-%, insb. 20 -40 Gew.-% |
| CaO-Komponente | 5 - 15 Gew.-%, insb. 8 - 12 Gew.-% |
| SO₃-Komponente | 3 - 7 Gew.-%, insb. 4 - 6 Gew.-% |
| Aluminiumpaste | 0,5 - 1 Gew.-%, insb. 0,6 - 0,7 Gew.-% |
| Treibporenhemmer | 0,1 - 0,4 Gew.-%, insb. 0,2 - 0,3 Ges.-% |
| Gesteinsmehl und/oder andere | 0 - 30 Gew.-%, insb. 15 - |
| inerte oder puzzolanische | 25 Gew.-% |
| Zusatzstoffe (Feinheit: 2000 - 5000 cm²/g) | |
| Zusatzmittel | 0 - 1 Gew.-% |
| Wasser-Feststoff-Verhältnis | 1,2 - 1,5, insb. 1,3 - 1,4 |

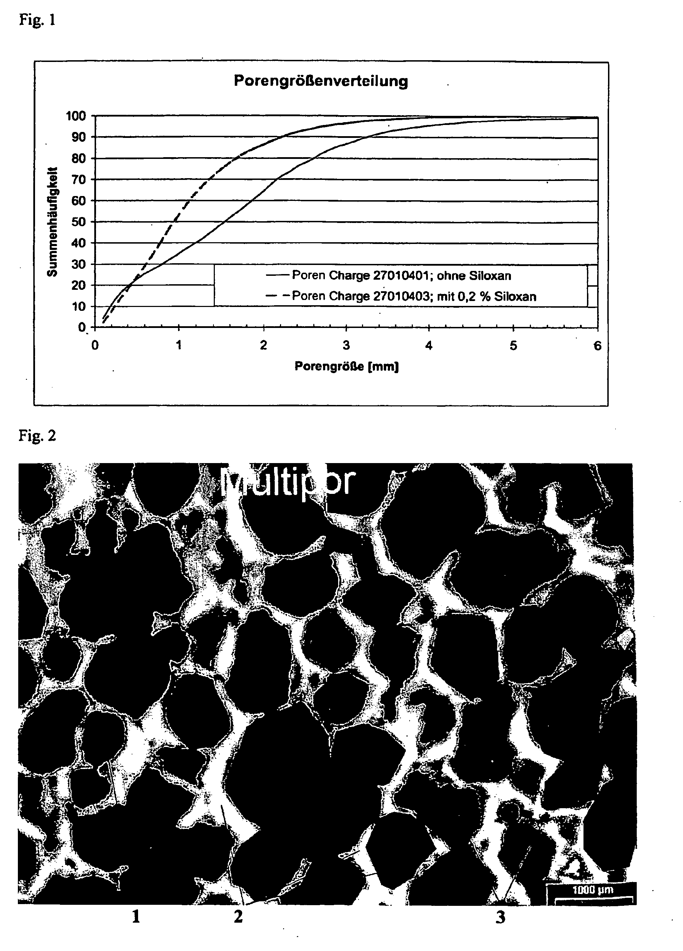

Ein erfindungsgemäßes calciumsilikathydratgebundenes aluminiumgetriebenes Dämmelement besitzt vorzugsweise eine Rohdichte zwischen 75 und 110 kg/m³, wobei mehr als 40 Vol.-%, insbesondere mehr als 50 Vol.-% der Treibporen kleiner als 1,0 mm und mehr als 75 Vol.-%, insbesondere mehr als 85 Vol.-% kleiner als 2,0 mm sind. Die Gesamtporosität liegt vorzugsweise zwischen 90 und 98 Vol.-%, insbesondere zwischen 95 und 97 Vol.-% bei einem Anteil der Treibporen an der Gesamtporosität von vorzugsweise 80 bis 90 Vol.-%, insbesondere 83 bis 87 Vol.-%. Die Treibporengrößen werden z. B, lichtmikroskopisch an Schliffbildern bestimmt (siehe z. B. Figur 2). Bei bekannten Dämmplatten sind dagegen lediglich ca. 35 vol.-% der Poren kleiner als 1 mm. Die Gesamtporosität setzt sich aus den vom Calciumsilikathydratgerüst umgebenen Treibporen und aus Kapillarporen innerhalb des Gerüsts zusammen. Die Wärmeleitfähigkeit der erfindungsgemäßen Dämmelemente beträgt weniger als λ₁₀ₜᵣ = 0,045 W/mK, vorzugsweise höchstens λ₁₀ₜᵣ = 0,042 W/mK, und liegt beispielsweise zwischen 0,040 und 0,041 W/mK bei einer Rohdichte von 90 - 110 kg/ m³, vorzugsweise von 100 - 105 kg/m³ und beispielsweise zwischen 0,038 und 0,039 W/mK bei einer Rohdichte von 80 - 90 kg/m³, insbesondere 83 - 86 kg/m³. (λ₁₀ₜᵣ bezeichnet die Wärmeleitfähigkeit im trockenen Zustand bei 10°C.)

Offensichtlich hemmt tetrafunktionelles Polysiloxan die Bläschenbildung und damit die Treibwirkung von Aluminium dahingehend, dass zwar mit Rohdichten zwischen 75 und 110 kg/ m³ ein hoher Grad an Porosität erzielt wird, jedoch die Treibporen in der Mischung während des Treibens relativ klein bleiben und sich nicht zu größeren Poren vereinigen. Durch die Menge des zugegebenen Treibporenhemmers können die Größe und Anzahl der Treibporen und damit die Rohdichte und Wärmeleitfähigkeit sowie Festigkeit gezielt gesteuert werden. Eine größere Menge des Treibporenhemmers verringert die Größe der Treibporen stärker als eine kleinere Menge. Entsprechend erhöht sich die Anzahl der Treibporen, da sich das Gesamtvolumen der Treibporen nicht ändert. Innerhalb des bevorzugten Bereichs der zugegebenen Menge werden die erwünschten kleinen Treibporengrößen erzielt, ohne jedoch die Bildung der Treibporen beziehungsweise deren Wachstum so weit zu unterdrücken, dass große Rohdichten und damit hohe Wärmeleitfähigkeiten entstehen würden.

Zweckmäßigerweise wird zunächst ein mineralischer Bestandteil der Wasser-Feststoff-Suspension, der kein hydraulisches Bindemittel ist, zum Beispiel Quarzmehl oder Kalksteinmehl, mit dem Treibporenhemmer vorbehandelt, vermengt und anschließend der Wasser-Feststoff-Suspension zugegeben. Auch in diesem Fall zeigt der Treibporenhemmer die Wirkung, dass über 40 Vol.-%, insbesondere über 50 Vol.-% der Treibporen in den erhaltenen Dämmplatten kleiner als 1 mm und mehr als 75 Vol.-%, insbesondere mehr als 85 Vol.-% aller Treibporen kleiner als 2 mm sind, mit einer Rohdichte der Dämmplatten von beispielsweise 85 kg/m³ bis 100 kg/m³. Dies ist insbesondere im Falle der Behandlung von Kalksteinmehl mit tetrafunktionellem Polysiloxan überraschend, da Siloxane nur dafür bekannt sind, an silikatischen Oberflächen, wie beispielsweise von Flugaschen oder Quarzmehl zu reagieren. Eine entsprechende Wechselwirkung mit Kalzit war bisher nicht bekannt.

Die reaktionsfähige SiO₂-Komponente wird in der herkömmlichen, großen Feinheit von 5000 - 12000 cm²/g, insbesondere 8000 - 11000 cm²/g nach Blaine verwendet, um ein vollständiges Reagieren zu Calciumsilikathydraten insbesondere zu Tobermorit bei der hydrothermalen Härtung im Autoklaven zu gewährleisten. Da die feine SiO₂-Komponente, wie insbesondere Quarzmehl, aufwendig in der Herstellung und daher teuer ist, wird das Quarzmehl erfindungsgemäß vorteilhafterweise teilweise durch kostengünstiges Gesteinsmehl, wie Kalksteinmehl, mit einer Feinheit von 2000 - 5000 cm²/g ersetzt, wodurch die Kosten eines Versatzes für mineralische Dämmelemente bei beinahe unverändert guten Eigenschaften gesenkt werden können.

Vorzugsweise wird der Anteil der CaO-Komponente und der hydraulischen Bindemittelkomponente im Versatz dabei derart reduziert, dass trotz des Ersatzes der reaktionsfähigen SiO₂₋Komponente durch Gesteinsmehl das Verhältnis von insbesondere bei der Hydrothermalhärtung reaktionsfähigen CaO zu SiO₂ gleich bleibt.

In einer vorteilhaften Variante des erfindungsgemäßen Verfahrens werden die Zusatzstoffe Porenbetonmehl bzw. Dämmplattenmehl ungetrocknet mit dem üblichen hohen Feuchtigkeitsgehalt eingesetzt ohne die Rezeptur dadurch zu stören. Dies erspart ein zeitaufwendiges und kostenintensives Trocknungsverfahren und zeigt, dass wahrscheinlich der Treibporenhemmer trotz der Belegung der Partikeloberfläche mit Wassermolekülen an die Oberfläche ankoppeln kann und die erfindungsgemäße Treibporenhemmung ausübt.

Im Folgenden wird die Erfindung anhand von drei Beispielen näher erläutert.

In einem ersten Beispiel werden Quarzmehl und Anhydrit in Verhältnissen, wie in der folgenden Tabelle 1 angegeben, mit Wasser vermischt. Die Prozentangaben in Tabelle 1 sind Gewichtsprozent. Anschließend wird ein tetrafunktionelles Polysiloxan aufweisendes Produkt, nämlich SMK 1311 der Firma Wacker, Burghausen, mit einem Anteil von 0,2 Gew.-% auf die Gesamtmenge des Feststoffanteils zugegeben. Daraufhin wird 0,7 Gew.-% Aluminium als Paste zugemischt, die Al-Teilchen in einer Feinheit von d_{50 =} 32 - 35 µm aufweist. Anschließend werden Portlandzement und Branntkalk (CaO) in Mengen wie aus Tabelle 1 zu sehen in die Mischung gegeben und mit dieser verrührt. Das Wasser-Feststoff-Verhältnis beträgt 1,3. Die Mischung wird nun in übliche Gussformen verfüllt und auftreiben und ansteifen gelassen. Nach 24 Stunden werden die entstandenen, angesteiften, noch plastischen Formkuchen mit Vakuumsaugern den Formen entnommen und mit Drähten in Platten geschnitten. Die Platten werden anschließend autoklaviert und dadurch gehärtet.

**Tabelle 1**

| | |
|---|---|
| Quarzmehl | 38,5 Gew.-% |
| Portlandzement | 45,5 Gew.-% |
| Branntkalk | 10,5 Gew.-% |
| Anhydrit | 5,5 Gew.-% |

In einer Vergleichsmischung eines zweiten Beispiels werden die gleichen Mischungsbestandteile wie im ersten Beispiel in denselben Mengenverhältnissen und derselben Reihenfolge wiederum mit einem Wasser-Feststoff-Verhältnis von 1,3 vermischt, jedoch ohne einen Treibporenhemmer zuzugeben, und zu Dämmplatten verarbeitet.

Die Ergebnisse der beiden Beispiele sind in Figur 1 dargestellt. Figur 1 zeigt die Summenhäufigkeitsverteilung der Treibporengröße der gemäß dem ersten Beispiel hergestellten Dämmplatte mit tetrafunktionellem Polysiloxan (gestrichelte Linie) und der Treibporengröße der gemäß dem zweiten Beispiel hergestellten Dämmplatte ohne tetrafunktionelles Polysiloxan (durchgezogene Linie).

Aus Figur 1 ergibt sich, dass 53 Vol.-% aller Treibporen der erfindungsgemäßen Dämmplatten mit tetrafunktionellem Polysiloxan im Durchmesser kleiner als 1 mm, 87 Vol.-% im Durchmesser kleiner als 2 mm sind. Die Trockenrohdichte der Platte beträgt 102 kg/m³, der λ₁₀ₜᵣ-Wert 0,0404 W/mK.

Nur 35 Vol.-% aller Treibporen hingegen in den sich ergebenden Dämmplatten des zweiten Beispiels sind kleiner als 1 mm, 65 Vol.-% kleiner als 2 mm (durchgezogene Kurve). Die Trockenrohdichte beträgt 104 kg/m³; die Wärmeleitfähigkeit λ₁₀ₜᵣ liegt mit 0,0441 W/mK ca. 10% über dem Wert der mit dem erfindungsgemäßen Verfahren hergestellten Dämmplatten.

Die Gleichmäßigkeit der Treibporen der Dämmplatte gemäß dem ersten Beispiel ist aus Figur 2 erkennbar. Figur 2 zeigt eine lichtmikroskopische Aufnahme einer Dämmplatte gemäß dem ersten Beispiel. Treibporen 1 sind durch Stege 2 voneinander getrennt. Mikroporen in den Stegen 2 sind bei der vorliegenden Vergrößerung nicht zu erkennen, jedoch vorhanden. Von der Gesamtporosität des Dämmelements sind 86 Vol.-% Treibporen 1, und 14 Vol.-% Mikroporen. Man erkennt die Gleichmäßigkeit der im wesentlichen kugelartigen Treibporengröße und dass ein Großteil der Treibporen kleiner als 1 mm im Durchmesser ist. Die Gesamtporosität liegt bei 95 - 97 Vol.-%.

In einem dritten Beispiel wird in einer Mischung gemäß dem ersten Beispiel ein Teil des Quarzmehls durch Kalksteinmehl mit der Feinheit von 3000 cm²/g nach Blaine ersetzt, wobei der CaO- und der Portlandzementgehalt so verringert werden, dass das Verhältnis von reaktionsfähigem CaO zu SiO₂ wie in der von Tabelle 1 gezeigten Mischung erhalten bleibt. Die genaue Mischungszusammensetzung der mineralischen Bestandteile ist in Tabelle 2 gezeigt.

**Tabelle 2**

| | |
|---|---|
| Quarzmehl | 23,8 Gew.-% |
| Kalksteinmehl | 25,0 Gew.-% |
| Portlandzement | 37,0 Gew.-% |
| Branntkalk | 9,5 Gew.-% |
| Anhydrit | 4,7 Gew.-% |

Es ergeben sich Dämmplatten, deren Treibporen wiederum eine sehr gleichmäßige Größenverteilung aufweisen. Mehr als 50 Vol. -% der Treibporen sind kleiner als 1 mm und mehr als 75 Vol.-% sind kleiner als 2 mm.

## Patentansprüche

1. Mineralisches, Calciumsilikathydrate als Gerüst und vom Gerüst umgebene Treibporen aufweisendes, aluminiumgetriebenes Dämmelement, insbesondere Dämmplatte,
**dadurch gekennzeichnet, dass**
mehr als 40 Vol-%, insbesondere mehr als 50 Vol.-% der Treibporen im Durchmesser kleiner als 1 mm und mehr als 75 Vol.-%, insbesondere mehr als 85 Vol.-% der Treibporen im Durchmesser kleiner als 2 mm sind, wobei die Gesamtporosität 90 bis 98 Vol.-% beträgt und 80 bis 90 Vol.-%, insbesondere 83 bis 87 Vol.-% der Gesamtporosität aus Treibporen besteht und dass die Wärmeleitfähigkeit λ₁₀ₜᵣ weniger als 0,045 W/mK beträgt.

2. Dämmelement nach Anspruch 1,
**dadurch gekennzeichnet, dass**
die Wärmeleitfähigkeit λ₁₀ₜᵣ zwischen 0,042 W/mK und 0,045 W/mK liegt.

3. Dämmelement nach Anspruch 1,
**dadurch gekennzeichnet, dass**
die Wärmeleitfähigkeit λ₁₀ₜᵣ weniger als 0,042 W/mK beträgt.

4. Dämmelement nach einem oder mehreren der Ansprüche 1 bis 3,
**dadurch gekennzeichnet, dass**
die Rohdichte 75 bis 100 kg/m³ beträgt.

5. Dämmelement nach einem oder mehreren der Ansprüche 1 bis 4,
**dadurch gekennzeichnet, dass**
ein Gesteinsmehl, insbesondere Kalksteinmehl, enthalten ist.

6. Dämmelement nach Anspruch 5,
**dadurch gekennzeichnet, dass**
der Gehalt an Gesteinsmehl bis 30 Gew.-%, insbesondere 15 - 25 Gew.-%, beträgt.

7. Dämmelement nach Anspruch 5 und/oder 6,
**dadurch gekennzeichnet, dass**
das Gesteinsmehl eine Feinheit von 2000 bis 5000 cm²/g aufweist.

8. Dämmelement nach einem oder mehreren der Ansprüche 1 bis 7,
**dadurch gekennzeichnet, dass**
die Druckfestigkeit zwischen 0,20 und 0,41 N/mm² liegt.

9. Dämmelement nach einem oder mehreren der Ansprüche 1 bis 8,
**dadurch gekennzeichnet, dass**
die Mineralhauptphase des Gerüsts Tobermorit ist.

10. Dämmelement nach einem oder mehreren der Ansprüche 1, und 3 bis 9 ohne Rückbezug auf Anspruch 2,
**dadurch gekennzeichnet, dass**
die Wärmeleitfähigkeit λ₁₀ₜᵣ bei einer Rohdichte von 90 kg/m³ bis 110 kg/m³, insbesondere von 100 kg/m³ - 105 kg/m³, zwischen 0,040 und 0,041 W/mK liegt.

11. Dämmelement nach einem oder mehreren der Ansprüche 1, und 3 bis 9 ohne Rückbezug auf Anspruch 2,
**dadurch gekennzeichnet, dass**
die Wärmeleitfähigkeit λ₁₀ₜᵣ bei einer Rohdichte von 80 kg/m³ bis 90 kg/m³, insbesondere von 83 kg/m³ - 86 kg/m³, zwischen 0,038 und 0,039 W/mK liegt.

12. Dämmelement nach einem oder mehreren der Ansprüche 1 bis 11,
**dadurch gekennzeichnet, dass**
tetrafunktionelles Polysiloxan, enthalten ist.

13. Verfahren zur Herstellung mineralischer calciumsilikathydratgebundener Dämmelemente nach einem oder mehreren der Ansprüche 1 bis 12, wobei eine Wasser, mindestens eine reaktionsfähige SiO₂-Komponente insbesondere Quarzmehl, mindestens eine hydraulische Bindemittelkomponente, insbesondere Portlandzement, mindestens eine reaktionsfähige CaO-Komponente, insbesondere Branntkalk und/oder Kalkhydrat, mindestens eine SO₃-Komponente, insbesondere Gips und/oder Anhydrit, sowie gegebenenfalls übliche Zusatzstoffe, wie Gesteinsmehl insbesondere üblicher Feinheit und/oder andere inerte oder puzzolanische Zusatzstoffe, wie Flugasche, Porenbetonmehl, Dämmplattenmehl oder dergleichen, und gegebenenfalls übliche Zusatzmittel enthaltende Mischung mit feinteiligem Aluminium üblicher Feinheit zur Porenentwicklung auftreiben und ansteifen gelassen, gegebenenfalls zugeschnitten, und hydrothermal gehärtet wird,
**dadurch gekennzeichnet, dass**
feinteiliges plättchenförmiges Aluminium in Pulver oder Pastenform verwendet wird, vor der Zugabe des Aluminiums ein die Treibporenentwicklung hemmendes und/oder die Entwicklung kleiner Treibporen beeinflussendes Mittel verwendet wird, welches entweder in Form eines ein tetrafunktionelles Polysiloxan enthaltenden Mittels oder in Form eines tetrafunktionellen Polysiloxans vorliegt.

14. Verfahren nach Anspruch 13,
**dadurch gekennzeichnet, dass**
der Treibporenhemmer vor oder während der Zugabe der hydraulischen Bindemittelkomponente zugegeben wird.

15. Verfahren nach Anspruch 13 und/oder 14,
**dadurch gekennzeichnet, dass**
das tetrafunktionelle Siloxan der Mischung in Mengen von 0,1 bis 0,4 Gew.-%, insbesondere von 0,2 bis 0,3 Gew.-%, bezogen auf den Feststoffgehalt der Mischung zugegeben wird.

16. Verfahren nach einem oder mehreren der Ansprüche 13 bis 15,
**dadurch gekennzeichnet, dass**
der Mischung als Gesteinsmehl Kalksteinmehl zugegeben wird.

17. Verfahren nach einem oder mehreren der Ansprüche 13 bis 16,
**dadurch gekennzeichnet, dass**
ein Gesteinsmehl verwendet wird, das eine Feinheit von 2000 bis 5000 cm²/g aufweist.

18. Verfahren nach einem oder mehreren der Ansprüche 13 bis 17,
**dadurch gekennzeichnet, dass**
zumindest ein Teil des Quarzmehls durch das Gesteinsmehl ersetzt wird.

19. Verfahren nach Anspruch 18,
**dadurch gekennzeichnet, dass**
das Verhältnis von insbesondere bei der Hydrothermalhärtung reaktionsfähigem CaO zu insbesondere bei der Hydrothermalhärtung reaktionsfähigem SiO₂ so eingestellt wird, dass es in der hydrothermalen Härtung zur Bildung von Tobermorit als Mineralhauptphase kommt.

20. Verfahren nach einem oder mehreren der Ansprüche 13 bis 19,
**dadurch gekennzeichnet, dass**
eine reaktionsfähige SiO₂-Komponente mit einer Feinheit von 5000 bis 12000 cm²/g insbesondere von 8000 - 11000 cm²/g verwendet wird.

21. Verfahren nach einem oder mehreren der Ansprüche 13 bis 20,
**dadurch gekennzeichnet, dass**
eine hydraulische Bindemittelkomponente einer Feinheit von 2000 bis 5000 cm²/g verwendet wird.

22. Verfahren nach einem oder mehreren der Ansprüche 13 bis 21,
**dadurch gekennzeichnet, dass**
der Mischung, bezogen auf den Feststoffgehalt, 15 bis 45 Gew.-%, insbesondere 20 bis 40 Gew.-% der SiO₂-Komponente bezogen auf das SiO₂-Äquivalent, bis zu 30 Gew.-%, insbesondere 15 bis 25 Gew.-% Gesteinsmehl und/oder andere inerte oder puzzolanische Zusatzstoffe, 30 bis 50 Gew.-%, insbesondere 35 bis 45 Gew.-% hydraulische Bindemittelkomponente, 5 bis 15 Gew.-%, insbesondere 8 bis 12 Gew.-% der CaO-Komponente bezogen auf das CaO-Äquivalent und 3 bis 7 Gew.-%, insbesondere 4 bis 6 Gew.-% der SO₃-Komponente bezogen auf das SO₃-Äquivalent, sowie 0 bis 1 Gew.-% der Zusatzmittel zugegeben werden.

23. Verfahren nach einem oder mehreren der Ansprüche 13 bis 22,
**dadurch gekennzeichnet, dass**
das feinteilige Aluminium in Mengen von 0,5 bis 1 Gew.-%, insbesondere 0,6 bis 0,7 Gew.-% bezogen auf den Feststoffgehalt der Mischung zugegeben wird.

24. Verfahren nach einem oder mehreren der Ansprüche 13 bis 23,
**dadurch gekennzeichnet, dass**
feinteiliges Aluminium mit einem d₅₀-Wert von 32 bis 35 µm verwendet wird.

25. Verfahren nach einem oder mehreren der Ansprüche 13 bis 24,
**dadurch gekennzeichnet, dass**
ein mineralischer Bestandteil der Mischung, der kein hydraulisches Bindemittel ist, vor dem Zugeben zur Mischung mit dem Treibporenhemmer vermengt wird.

26. Verfahren nach einem oder mehreren der Ansprüche 13 bis 25,
**dadurch gekennzeichnet, dass**
der Mischung so viel Wasser zugegeben wird, dass ein Wasser-Feststoff-Verhältnis von 1,2 bis 1,5, insbesondere 1,3 bis 1,4 eingestellt wird.

27. Verfahren nach einem oder mehreren der Ansprüche 13 bis 26,
**dadurch gekennzeichnet, dass**
die Mischung in eine Gussform gegossen wird und nach dem Ansteifen zu einem Block mit ausreichender Grünstandfestigkeit ggf. in einzelne Elemente, insbesondere Platten geschnitten und anschließend zu Dämmelementen, insbesondere Dämmplatten, gehärtet, insbesondere autoklaviert wird.

## Claims

1. A mineral, aluminium-blown insulation element, in particular an insulation panel, comprising calcium silicate hydrates as a framework and blown pores surrounded by the framework,
**characterised in that**
more than 40 vol.%, particularly more than 50 vol.%, of the blown pores have a diameter of less than 1 mm and more than 75 vol.%, particularly more than 85 vol.%, of the blown pores have a diameter of less than 2 mm, the total porosity being 90 to 98 vol.%, and 80 to 90 vol.%, particularly 83 to 87 vol.%, of the total porosity consisting of blown pores, and **in that** the thermal conductivity λ_{10dr} is less than 0.045 W/mK.

2. The insulation element according to claim 1,
**characterised in that**
the thermal conductivity λ_{10dr} is between 0.042 W/mK and 0.045 W/mK.

3. The insulation element according to claim 1,
**characterised in that**
the thermal conductivity λ_{10dr} is less than 0.042 W/mK.

4. The insulation element according to one or more of claims 1 to 3,
**characterised in that**
the bulk density is 75 to 100 kg/m³.

5. The insulation element according to one or more of claims 1 to 4,
**characterised in that**
a ground rock, in particular ground limestone, is contained.

6. The insulation element according to claim 5,
**characterised in that**
the content of ground rock is up to 30 wt.%, particularly 15 - 25 wt.%.

7. The insulation element according to claim 5 and/or 6,
**characterised in that**
the ground rock has a fineness of 2000 to 5000 cm²/g.

8. The insulation element according to one or more of claims 1 to 7,
**characterised in that**
the compressive strength is between 0.20 and 0.41 N/mm².

9. The insulation element according to one or more of claims 1 to 8,
**characterised in that**
the main mineral phase of the framework is tobermorite.

10. The insulation element according to one or more of claims 1 and 3 to 9 without reference to claim 2,
**characterised in that**
the thermal conductivity λ_{10dr} with a bulk density of 90 kg/m³ to 110 kg/m³, particularly 100 kg/m³ - 105 kg/m³, is between 0.040 and 0.041 W/mK.

11. The insulation element according to one or more of claims 1 and 3 to 9 without reference to claim 2,
**characterised in that**
the thermal conductivity λ_{10dr} with a bulk density of 80 kg/m³ to 90 kg/m³, particularly 83 kg/m³ to 86 kg/m³, is between 0.038 and 0.039 W/mK.

12. The insulation element according to one or more of claims 1 to 11,
**characterised in that**
tetrafunctional polysiloxane is contained.

13. A method for producing mineral insulation elements bound by means of calcium silicate hydrate according to one or more of claims 1 to 12, wherein a mixture containing water, at least one reactive SiO₂ component, in particular silica flour, at least one hydraulic binder component, in particular Portland cement, at least one reactive CaO component, in particular quick lime and/or hydrated lime, at least one SO₃ component, in particular gypsum and/or anhydrite, and optionally conventional fillers, such as ground rock, in particular of conventional fineness, and/or other inert or pozzolanic fillers such as fly ash, ground aerated autoclaved concrete, ground insulation panels or the like, and optionally conventional admixtures, with finely divided aluminium of conventional fineness, is allowed to expand to develop pores, and to set, optionally cut up, and cured hydrothermally,
**characterised in that**
finely divided plate-like aluminium in powder or paste form is used, and an agent which inhibits blown pore development and/or influences the development of small blown pores is used before the addition of the aluminium, said agent being present either in the form of an agent containing a tetrafunctional polysiloxane or in the form of a tetrafunctional polysiloxane.

14. The method according to claim 13,
**characterised in that**
the blown pore inhibitor is added before or during the addition of the hydraulic binder component.

15. The method according to claim 13 and/or 14,
**characterised in that**
the tetrafunctional siloxane is added to the mixture in amounts of 0.1 to 0.4 wt.%, in particular 0.2 to 0.3 wt.%, based on the solids content of the mixture.

16. The method according to one or more of claims 13 to 15,
**characterised in that**
ground limestone is added to the mixture as ground rock.

17. The method according to one or more of claims 13 to 16,
**characterised in that**
a ground rock having a fineness of 2000 to 5000 cm²/g is used.

18. The method according to one or more of claims 13 to 17,
**characterised in that**
at least part of the silica flour is replaced by the ground rock.

19. The method according to claim 18,
**characterised in that**
the ratio of CaO that is reactive particularly during hydrothermal curing to SiO₂ that is reactive particularly during hydrothermal curing is adjusted so that tobermorite is formed as the main mineral phase during the hydrothermal curing.

20. The method according to one or more of claims 13 to 19,
**characterised in that**
a reactive SiO₂ component having a fineness of 5000 to 12000 cm²/g, in particular 8000 - 11000 cm²/g, is used.

21. The method according to one or more of claims 13 to 20,
**characterised in that**
a hydraulic binder component having a fineness of 2000 to 5000 cm²/g is used.

22. The method according to one or more of claims 13 to 21,
**characterised in that**,
based on the solids content, 15 to 45 wt.%, in particular 20 to 40 wt.% of the SiO₂ component, based on the SiO₂ equivalent, up to 30 wt.%, in particular 15 to 25 wt.% of ground rock and/or other inert or pozzolanic fillers, 30 to 50 wt.%, in particular 35 to 45 wt.% of hydraulic binder component, 5 to 15 wt.%, in particular 8 to 12 wt.% of the CaO component, based on the CaO equivalent, and 3 to 7 wt.%, in particular 4 to 6 wt.% of the SO₃ component, based on the SO₃ equivalent, and also 0 to 1 wt.% of admixtures are added to the mixture.

23. The method according to one or more of claims 13 to 22,
**characterised in that**
the finely divided aluminium is added in amounts of 0.5 to 1 wt.%, particularly 0.6 to 0.7 wt.%, based on the solids content of the mixture.

24. The method according to one or more of claims 13 to 23,
**characterised in that**
finely divided aluminium having a d₅₀ value of 32 to 35 µm is used.

25. The method according to one or more of claims 13 to 24,
**characterised in that**
a mineral constituent of the mixture which is not a hydraulic binder is mixed with the blown pore inhibitor before addition to the mixture.

26. The method according to one or more of claims 13 to 25,
**characterised in that**
water is added to the mixture in such an amount that a water/solids ratio of 1.2 to 1.5, particularly 1.3 to 1.4, is established.

27. The method according to one or more of claims 13 to 26,
**characterised in that**
the mixture is poured into a casting mould and, after setting to form a block having sufficient green strength, is optionally cut into individual elements, particularly panels, and subsequently cured, particularly autoclaved, to form insulation elements, particularly insulation panels.

## Revendications

1. Élément d'isolation minéral en aluminium déployé, présentant des silicates de calcium hydratés comme ossature et des pores expansés entourés par l'ossature, en particulier panneau isolant, **caractérisé en ce que** plus de 40% en volume, en particulier plus de 50% en volume des pores expansés ont un diamètre inférieur à 1 mm et plus de 75% en volume, en particulier plus de 85% en volume des pores expansés ont un diamètre inférieur à 2 mm, la porosité totale allant de 90 à 98% en volume et 80 à 90% en volume, en particulier 83 à 87% en volume de la porosité totale étant constituée par des pores expansés, et **en ce que** la conductibilité thermique λ₁₀ₜᵣ est inférieure à 0,045 W/mK.

2. Élément d'isolation selon la revendication 1,
**caractérisé en ce que** la conductibilité thermique λ₁₀ₜᵣ se situe dans la plage de 0,042 W/mK à 0,045 W/mK.

3. Élément d'isolation selon la revendication 1,
**caractérisé en ce que** la conductibilité thermique λ₁₀ₜᵣ est inférieure à 0,042 W/mK.

4. Élément d'isolation selon l'une ou plusieurs des revendications 1 à 3,
**caractérisé en ce que** la densité brute se situe dans la plage de 75 à 100 kg/m³.

5. Élément d'isolation selon l'une ou plusieurs des revendications 1 à 4,
**caractérisé en ce qu'**il contient une poudre de roche, en particulier de la poudre de calcaire.

6. Élément d'isolation selon la revendication 5,
**caractérisé en ce que** la teneur en poudre de roche est de 30% en poids, en particulier de 15 à 25% en poids.

7. Élément d'isolation selon la revendication 5 et/ou la revendication 6,
**caractérisé en ce que** la poudre de roche présente une finesse de 2000 à 5000 cm²/g.

8. Élément d'isolation selon l'une ou plusieurs des revendications 1 à 7,
**caractérisé en ce que** la résistance à la compression se situe dans la plage de 0,20 à 0,41 N/mm².

9. Élément d'isolation selon l'une ou plusieurs des revendications 1 à 8,
**caractérisé en ce que** la phase minérale principale de l'ossature est de la tobermorite.

10. Élément d'isolation selon l'une ou plusieurs des revendications 1, et 3 à 9 sans subordination à la revendication 2,
**caractérisé en ce que** la conductibilité thermique λ₁₀ₜᵣ à une densité brute de 90 kg/m³ à 110 kg/m³, en particulier de 100 kg/m³ à 105 kg/m³, se situe dans la plage de 0,040 à 0,041 W/mK.

11. Élément d'isolation selon l'une ou plusieurs des revendications 1, et 3 à 9 sans subordination à la revendication 2,
**caractérisé en ce que** la conductibilité thermique λ₁₀ₜᵣ à une densité brute de 80 kg/m³ à 90 kg/m³, en particulier de 83 kg/m³ à 86 kg/m³, se situe dans la plage de 0,038 à 0,039 W/mK.

12. Élément d'isolation selon l'une ou plusieurs des revendications 1 à 11,
**caractérisé en ce qu'**il contient un polysiloxane tétrafonctionnel.

13. Procédé de fabrication d'éléments d'isolation minéraux liés par des silicates de calcium hydratés selon l'une ou plusieurs des revendications 1 à 12, dans lequel on fait gonfler un mélange contenant de l'eau, au moins un composant à base de SiO₂ réactif, en particulier de la poudre de quartz, au moins un composant liant hydraulique, en particulier du ciment portland, au moins un composant à base de CaO réactif, en particulier de la chaux vive et/ou de la chaux hydratée, au moins un composant à base de SO₃, en particulier du gypse et/ou de l'anhydrite, ainsi le cas échéant que des additifs usuels tels que de la poudre de roche, en particulier de finesse habituelle, et/ou d'autres additifs inertes ou pouzzolaniques tels que des cendres volantes, de la poudre de béton cellulaire, de la poudre de panneaux isolants ou similaires, et le cas échéant des adjuvants usuels, avec de l'aluminium finement divisé de finesse usuelle afin de provoquer la formation de pores et on le laisse prendre, le cas échéant on le coupe à dimension et on le soumet à un durcissement hydrothermique,
**caractérisé en ce que** l'on utilise de l'aluminium lamellaire finement divisé sous forme de poudre ou de pâte et **en ce que**, avant l'ajout de l'aluminium, on utilise un agent qui inhibe la formation de pores expansés et/ou qui influe sur la formation de pores expansés de petite taille, lequel agent se présente soit sous la forme d'un produit contenant un polysiloxane tétrafonctionnel, soit sous la forme d'un polysiloxane tétrafonctionnel.

14. Procédé selon la revendication 13,
**caractérisé en ce que** l'inhibiteur de pores expansés est ajouté avant ou pendant l'ajout du composant liant hydraulique.

15. Procédé selon la revendication 13 et/ou la revendication 14,
**caractérisé en ce que** le siloxane tétrafonctionnel est ajouté au mélange en une quantité allant de 0,1 à 0,4% en poids, en particulier de 0,2 à 0,3% en poids, ramenée à la teneur en solides du mélange.

16. Procédé selon l'une ou plusieurs des revendications 13 à 15,
**caractérisé en ce que** la poudre de roche ajoutée au mélange est de la poudre de calcaire.

17. Procédé selon l'une ou plusieurs des revendications 13 à 16,
**caractérisé en ce que** l'on utilise une poudre de roche qui présente une finesse de 2000 à 5000 cm²/g.

18. Procédé selon l'une ou plusieurs des revendications 13 à 17,
**caractérisé en ce qu'**une partie au moins de la poudre de quartz est remplacée par la poudre de roche.

19. Procédé selon la revendication 18,
**caractérisé en ce que** le ratio du CaO réactif en particulier lors du durcissement hydrothermique sur le SiO₂ réactif en particulier lors du durcissement hydrothermique est ajusté de telle manière que le durcissement hydrothermique entraîne la formation de tobermorite en tant que phase minérale principale.

20. Procédé selon l'une ou plusieurs des revendications 13 à 19,
**caractérisé en ce que** l'on utilise un composant à base de SiO₂ réactif ayant une finesse dans la plage de 5000 à 12000 cm²/g, en particulier de 8000 à 11000 cm²/g.

21. Procédé selon l'une ou plusieurs des revendications 13 à 20,
**caractérisé en ce que** l'on utilise un composant liant hydraulique ayant une finesse dans la plage de 2000 à 5000 cm²/g.

22. Procédé selon l'une ou plusieurs des revendications 13 à 21,
**caractérisé en ce que** l'on ajoute au mélange, ramené à la teneur en solides, de 15 à 45% en poids, en particulier de 20 à 40% en poids du composant à base de SiO₂ exprimés en équivalent SiO₂ jusqu'à 30% en poids, en particulier de 15 à 25% en poids de poudre de roche et/ou d'autres additifs inertes ou pouzzolaniques, de 30 à 50% en poids, en particulier de 35 à 45% en poids du composant liant hydraulique, de 5 à 15% en poids, en particulier de 8 à 12% en poids du composant à base de CaO, exprimés en équivalent CaO, et de 3 à 7% en poids, en particulier de 4 à 6% en poids du composant à base de SO₃, exprimés en équivalent SO₃, ainsi que de 0 à 1 % en poids des adjuvants.

23. Procédé selon l'une ou plusieurs des revendications 13 à 22,
**caractérisé en ce que** l'aluminium finement divisé est ajouté en une quantité allant de 0,5 à 1% en poids, en particulier de 0,6 à 0,7% en poids, ramenée à la teneur en solides du mélange.

24. Procédé selon l'une ou plusieurs des revendications 13 à 23,
**caractérisé en ce que** l'on utilise de l'aluminium finement divisé ayant une valeur d₅₀ dans la plage de 32 à 35 µm.

25. Procédé selon l'une ou plusieurs des revendications 13 à 24,
**caractérisé en ce que** l'on mélange un constituant minéral du mélange qui n'est pas un liant hydraulique avec l'inhibiteur de pores expansés avant de les ajouter au mélange.

26. Procédé selon l'une ou plusieurs des revendications 13 à 25,
**caractérisé en ce que** l'on ajoute au mélange une quantité d'eau qui permet d'ajuster le ratio eau/solides dans la plage de 1,2 à 1,5, en particulier de 1,3 à 1,4.

27. Procédé selon l'une ou plusieurs des revendications 13 à 26,
**caractérisé en ce que** l'on coule le mélange dans un moule de coulée et, après la prise, on le recoupe en un bloc ayant une résistance à cru suffisante ou le cas échéant en éléments individuels, en particulier en panneaux, et ensuite on le durcit, en particulier par autoclavage, pour former des éléments d'isolation, en particulier des panneaux isolants.
